(19) Europäisches Patentamt
European Patent Office
Office européen des brevets

(11) **EP 3 516 858 B1**

(12) **EUROPEAN PATENT SPECIFICATION**

(45) Date of publication and mention
of the grant of the patent:
**05.08.2020 Bulletin 2020/32**

(21) Application number: **17780658.5**

(22) Date of filing: **22.09.2017**

(51) Int Cl.:
**H04M 11/06** (2006.01)     **H04W 72/08** (2009.01)

(86) International application number:
**PCT/EP2017/074050**

(87) International publication number:
**WO 2018/055092 (29.03.2018 Gazette 2018/13)**

(54) **ALLOCATION OF PHYSICAL COMMUNICATION RESOURCES**

ZUTEILUNG VON PHYSISCHEN KOMMUNIKATIONSRESSOURCEN

ATTRIBUTION DES RESSOURCES PHYSIQUES DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.09.2016 EP 16290181**

(43) Date of publication of application:
**31.07.2019 Bulletin 2019/31**

(73) Proprietors:
• **Alcatel Lucent
92100 Boulogne-Billancourt (FR)**
• **Nokia Solutions and Networks Oy
02610 Espoo (FI)**

(72) Inventors:
• **DE VLEESCHAUWER, Danny
2018 Antwerpen (BE)**
• **DE SCHEPPER, Koen A.E.
2018 Antwerpen (BE)**
• **TSIAFLAKIS, Paschalis
2018 Antwerp (BE)**

(74) Representative: **IP HILLS NV
Hubert Frère-Orbanlaan 329
9000 Gent (BE)**

(56) References cited:
WO-A1-2013/132213     WO-A1-2014/209493
WO-A1-2016/064308     US-A1- 2016 219 602

## Description

## Technical Field

The present disclosure generally relates to the allocation of physical resources of a shared communication medium to different communication channels. Allocation may for example be performed by time-, frequency- and/or code-division multiplexing at a Physical Layer (PHY). Examples of applications where the medium is shared are

- upstream and downstream traffic between a home gateway and the access multiplexer in Digital Subscriber Lines (DSLs) or in Passive Optical Networks (PONs); and
- upstream and downstream traffic of multiple users between a cable modem (CM) and the cable modem termination system (CMTS); and
- traffic between mobile devices and the eNodeB sharing the same air interface; and
- traffic from different network providers sharing the same physical cable in an unbundling scenario.

More particularly, the disclosure relates to the dynamic allocation of the resources to the communication channels.

## Background

Recent digital subscriber line technologies such as G.fast published under ITU-T G.9700 and G.9701 provides mechanisms that allow to dynamically control the link rates. For instance, dynamic resource allocation (DRA) allows to dynamically control the quasi-instantaneous upstream and downstream link rates. Concrete examples are independent dynamic time assignment (iDTA) and coordinated dynamic time assignment (cDTA) in G.fast that allows to dynamically update the sharing of time division duplex (TDD) frames between upstream and downstream. The allocation of the resources between upstream and downstream can be retuned every 1ms to 100ms, depending on the implementation.

Dynamic link rate reconfiguration is not only restricted to the above dynamic time assignment schemes. Vectoring can for instance also be used to redistribute link rates over different users in downstream and/or upstream. Also, for the (multi-user) full duplex setting in G.fast or G.mgfast one may even redistribute the upstream and downstream rates dynamically.

Another use case of dynamic resource allocation is the dynamic scheduling of full duplex DOCSIS resources resulting in time dynamic upstream and downstream link rates by the use of interference groups, frequency division duplexing (FDD) and cable modem frequency-time slot allocation.

A Proportional Fair Share (PFS) scheduler used in mobile networks allocates the physical resources such that every mobile device and thus communication channel receives an equal share of the available physical resources. For example, each device receives the same number of time-slots or frequency slots.

An Adaptive Guaranteed Bit Rate (AGBR) scheduler as proposed in US20130091248A1 provides a soft guarantee for a mobile device requesting certain media over the communication channel. When the radio conditions of the mobile device are worse, the device will receive a larger allocation of the resources in order to guarantee a certain bit rate.

US7440760B2 discloses a dynamic system that allocates the physical resources based on the quality of the communication channel such that each device gets a similar share of the total bandwidth.

While the above solutions allow for dynamicity, they only allow that the resources can be re-allocated according to certain conditions. Initial deployments did not exploit their full capability because they are used in a way that strives for a fixed rate allocation per user of the communication medium. Therefore, more advanced schemes have been proposed that target a dynamic link rate allocation.

A first DRA allocation mechanism monitors the difference between the rate of the offered traffic and the actual served capacity of a respective communication channel (both expressed in the same units, e.g. bits per sec), which is indicative for a rate margin that the respective communication channel still has. The mechanism will then adjust the resource allocation and thus the link rates so that first the rate headroom of each channel exceeds a certain threshold, if possible, and then distributes the rest of the total headroom evenly amongst all channels.

A communication device will typically comprise a queueing mechanism with queues for buffering packets that are to be transmitted on a respective communication channel. This allows to avoid packet losses when the offered traffic rate, i.e., the rate at which packets enter the queue exceeds the link rate. A second DRA allocation mechanism will monitor the occupancy of the different queues and adjust the resource allocation according to the occupancy, i.e. the higher the occupancy of a queue, the higher the link rate.

Different queueing mechanisms have been proposed that work in parallel with the above resource allocation mechanisms.

The first and most simple mechanism is tail-dropping, i.e., packets are dropped from a queue when the queue is overflowing. A second mechanism is active queue management (AQM) that drops or marks packets more if the queue occupancy and thus the queue delay is or gets larger respectively, and less if it is or gets smaller. Older AQM mechanisms like RED (random early discard), drop or mark more packets if the queue occupancy is large, and less packets if the queue occupancy is small. The queue occupancy then evolves to a steady state working point, but exposes large random fluctuations around that steady state working point. More modern AQM mechanisms like PIE (proportional integral enhanced) and PI2 (proportional integral squared), try to keep the queue delay around a target value, by dropping or marking more if the delay is or tends to a value larger than the target and less if the delay is or tends to a value smaller than the target.

WO2014209493 (A1) discloses a method for managing, based on a video quality metric, a plurality of video streams being sent to a plurality of user terminals in a communication network based on a video quality metric, comprising the steps of determining whether the plurality of video streams being sent to the plurality of user terminals can be maintained with the video quality metric being above a first threshold level, and operating, in the case that the plurality of video streams to the plurality of user terminals cannot be maintained with the video quality metric being above the first threshold level, in a degradation control state in which a scheduling parameter is determined for use in scheduling of network resources for each of the plurality of video streams while targeting a maximum value of the video quality metric.

WO2013132213 (A1) discloses a method and apparatus for signalling congestion being caused by data items such as packets, received at a network element such as a router, in a communications network such as the Internet, or being caused by items otherwise requiring service or capacity from a shared resource. Preferred embodiments of the method involve identifying whether or not received data items received at a network element are capable of carrying congestion indications such as ECN marks, and for those that are capable, assigning congestion indications to the data items in dependence on a queue length characterisation based on a substantially current, instantaneous measurement of the length of the queue, whereas for those that are not capable, a sanction such as dropping may be applied in dependence on a different queue length characterisation based on a weighted moving average of current, recent, and less recent measurements of the length of the queue.

## Summary

One problem with the above solutions is that the dynamic resource allocation may adversely interact with congestion control mechanisms at the network, session or application layer. This is because the measurement of the amount of traffic on a communication channel or the occupancy of the queue feeding the channel is not a reliable indicator of how much resources should be allocated to the channel in environments in which sources react to congestion signals. Furthermore, as both congestion control mechanisms and physical resource allocation aim at a fair sharing of resources independently from each other, the combination of the two may result in an oscillatory behaviour and thus a waste of the available resources.

This is especially the case in an environment with elastic sources, for example with TCP traffic, which accounts for 90% of nowadays internet traffic. An elastic source typically follows the following rules: i) the source keeps increasing its sending rate until it experiences congestion; ii) when the source experiences congestion, detected by marked or dropped packets, the source decreases its sending rate. Because of this, dynamic resource allocation based on queue occupancy will not result in a fair allocation. For example, a tail-drop queue will always be full or nearly full because TCP will increase the rate until the tail-drops are detected. Therefore, the queue occupancy of a tail-drop queue is not a good indicator for allocating resources. Also for the more recent AQM mechanisms, the queue occupancy does not reflect the offered traffic, as the occupancy always balances around the working point.

Experiments have shown that dynamic resource allocation that relies on queue occupancy and thus also on queue delays may result in a link utilization of only 50%.

There is thus a need to solve the above identified issues and provide a solution for allocating resources that does not result in an unstable behaviour or adverse effects for some of the communication channels.

This objective is achieved, according to a first aspect, by communication controller for allocating resources to communication channels used by networking devices sharing a communication medium; and wherein the system is configured to:

- obtain congestion information indicative of amounts of congestion on the respective communication channels;
- allocate the resources such that the amounts of congestion converge.

Resources should be understood as an amount of transport capacity, expressed for example in bits per second, that can be divided among the different communication channels. The allocation may be done in terms of bits per second, bandwidth (in Hertz), time slots (in TDD systems), or time-frequency slots (in OFDMA or Orthogonal Frequency Division Multiple Access systems), codes (in CDMA or Code Division Multiple Access systems) etc. The communication channels represent the logical connections over the shared communication medium such as a DSL, DOCSIS or radio channel. A transmitting networking device may transmit information to one or more receiving networking devices by means of a networking interface connected to the communication medium. In a preferred embodiment, the communication channels comprise the uplink and downlink communication channels in a wired communication medium for DSL applications. Advantageously, the communication controller may correspond to the dynamic resource allocation (DRA) component that is defined in G.fast. More particularly, it can relate to iDTA or cDTA.

The congestion information is to be understood as an amount of congestion that is occurring on a respective communication channel. It is thus not the adaptation of the traffic by the congestion control mechanism itself. Hence, by allocating the resources such that the amount of congestion signals converges, the resources are fairly allocated and the allocation is not adversely affected by a congestion control mechanism.

According to an embodiment of the invention, the congestion information comprises packet losses or packets marked for congestion as monitored on the respective communication channels.

Such information may for example be obtained by packet inspection. It is an advantage that this information can be easily obtained by a receiving and transmitting node. For example, packet losses or marked packets may be observed in the networking or transport layer such as the TCP/IP layer. As congestion control mechanisms react on congestion signals, these signals are an indication of an upcoming change in traffic and congestion.

The congestion information may then further comprise a deviation from an average amount of congestion signals, e.g. packet losses or marked packets, detected on the respective communication channels. The allocating may then further be performed such that, for a respective communication channel, a change of the allocated transport capacity in time is proportional to the calculated deviation.

By performing the allocation in this way, the amount of congestion signals will converge only by solving a simple first order differential equation. Furthermore, the only variables needed are the amount of monitored congestion signals over time.

Advantageously, the communication controller is further configured to smoothen a contribution of sudden increases or decreases in the congestion information.

According to another embodiment, the congestion information comprises dropping or marking probabilities used by respective packet queue controllers for controlling network congestion on the respective communication channels.

Congestion of a communication channel is typically controlled by a packet queue controller. The packet queue controller may then for example drop packets from a transmission queue or mark packets before transmitting them such that a receiving node at the other end of the communication channel will notify the congestion to the sender, e.g. by an acknowledgement (ACK). The principle of acting pro-actively on packets in a queue to prevent congestion is also referred to as AQM or Active Queue Management. The dropping or marking is typically done randomly according to a certain probability, i.e. the dropping or marking probability. As the packet queue controller is aware of the amount of congestion on the communication channel, it is an advantage to obtain the congestion signals from such a packet queue controller thereby providing a simple but effective insight into the congestion occurring on the different communication channels.

The convergence of the congestion may then be further achieved by counteracting a first imbalance between the dropping or marking probabilities.

Additionally, the communication controller may further be configured to obtain at least one of:

- queue occupancies of transmit packet queues of the respective communication channels; and
- ingress rates of the transmit packet queues; and
- egress rates of the transmit packet queues;

or a time derivative thereof.

In other words, the allocating may also take into account other information than congestion information.

Accordingly, the allocating may then further be performed by further counteracting a second imbalance between the queue occupancies or a derivative thereof. This may for example be done in a weighted combination with the counteracting of the first imbalance.

According to a second aspect, the disclosure relates to a communication controller according to any one of the preceding claims wherein communication medium comprises an uplink and a downlink communication channel; and wherein the communication controller is configured to perform the resource allocation between the uplink and downlink communication channels.

According to a second aspect, the disclosure relates to a communication controller for allocating resources to a plurality of uplink and downlink communication channels on a respective plurality of communication media; and wherein the communication controller is configured to:

- obtain congestion information indicative of amounts of congestion on the respective communication channels; and
- determine a common resource allocation between the uplink and downlink communication channels such that amounts of congestion on the respective uplink and downlink communication channels converge to a common average.

Not all communication systems allow to allocate resources per communication line or medium, but only allow a common allocation, e.g. by a fixed ratio between the uplink and downlink rate for a plurality of communication lines or media. By performing the allocation based on an averaged amount of congestion occurring on all the communication mediums together, the negative effect of the different elastic sources can still be decreased.

According to a third aspect, the disclosure relates to a computer-implemented method for allocating resources to communication channels used by networking devices sharing a communication medium; the method comprising the following steps:

- obtaining congestion information indicative of amounts of congestion on the respective communication channels;
- allocating the resources such that the amounts of congestion converge.

According to a fourth aspect, the disclosure relates to a computer-implemented method for allocating resources to a plurality of uplink and downlink communication channels on a respective plurality of communication media; the method comprising the following steps:

- obtaining congestion information indicative of amounts of congestion on the respective communication channels; and
- determining a common resource allocation between the uplink and downlink communication channels such that amounts of congestion on the respective uplink and downlink communication channels converge to a common average.

## Brief Description of the Drawings

Fig. 1 illustrates a DSL system comprising an uplink and downlink communication channel; and

Fig. 2 illustrates a computing system comprising a prediction module and allocation module according to an embodiment; and

Fig. 3 illustrates steps performed for dynamically allocating resources to communication channels on a shared medium according to a first embodiment; and

Fig. 4 illustrates an uplink and downlink communication channel on a shared communication medium and uplink and downlink communication devices comprising transmission queues for respectively transmitting packets on the uplink- and downlink communication channel.

Fig. 5 illustrates a plurality of uplink and downlink communication channels on a respective plurality of shared communication media, and a plurality of uplink communication devices comprising transmission queues for respectively transmitting packets on the uplink communication channels, and a downlink communication device comprising transmission queues for respectively transmitting packets on the downlink communication channels.

Fig. 6 illustrates steps performed for dynamically allocating resources to communication channels on a shared medium according to a second embodiment; and

Fig. 7 illustrates steps performed for dynamically allocating resources to communication channels on a plurality of shared media according to a fourth embodiment; and

Fig. 8 illustrates a suitable computing system for performing steps according to various embodiments.

## Detailed Description of Embodiment(s)

The present disclosure relates to the allocation of physical resources of one or more shared communication media to different communication channels. Allocation may for example be performed by time-, frequency- and/or code-division multiplexing.

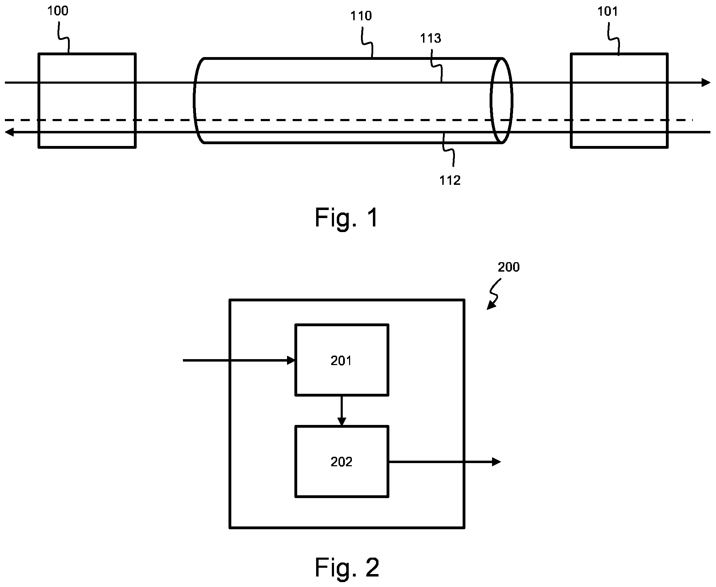

Fig. 1 illustrates a wired communication medium 110 connecting two computing devices 100 and 101, for example a Customer Premises Equipment (CPE) 101 connected by a twisted pair copper line 110 to a DSL Access Multiplexer (DSLAM) 100. As both the upstream communication channel 112 and the downstream communication channel 113 share the same medium, the resources are dynamically allocated to the respective downstream and upstream channel. DSL uses frequency division multiplexing (FDM), so allocation may be done in terms of bandwidth. Newer DSL communication standards such as G.fast or G.mgfast allow for such dynamic allocation.

Fig. 2 illustrates a computing system 200 for dynamically allocating resources to communication channels on a shared medium, for example to the upstream and downstream channels 112 and 113 of Fig. 1. It should be understood that computing system 200 may also be used for other applications where resources on a shared communication medium are to be allocated. In this respect, resources are an amount of transport capacity, expressed for example in bits per second, that can be divided among the different communication channels. The allocation may be done in terms of bits per second, bandwidth (in Hertz), time or time-slots (in OFDMA systems), codes (in CDMA systems) etc. As the allocation is done on the physical medium, it is typically performed at the Physical layer (PHY layer). The communication channels then represent the logical connections over the shared communication medium such as a radio channel. Using the communication channels a transmitting networking device may transmit information to one or more receiving networking devices.

Computing system 200 comprises a prediction module 201 and an allocation module 202. The prediction module monitors the traffic on the shared communication medium and predicts therefrom how the traffic on the communication channels may change in the future. Traffic may for example change because new data flows are established or an old one is being tore down, or existing data flows may change in bandwidth. The allocation module then receives this prediction and calculates the allocation of the resources based on the predicted change in traffic. Prediction module 201 and allocation module 202 may be implemented within a communication device that makes use of the shared medium, for example, modules 201 and 202 may be implemented in DSLAM 100 or CPE 101. Alternatively, modules 201 and 202 may be implemented remotely from the shared medium. For example, modules 201 and 202 may be implemented in a network analyser of a network operator located upstream from the DSLAM 100. The DSLAM 100 then provides the monitored information to the computing system 200.

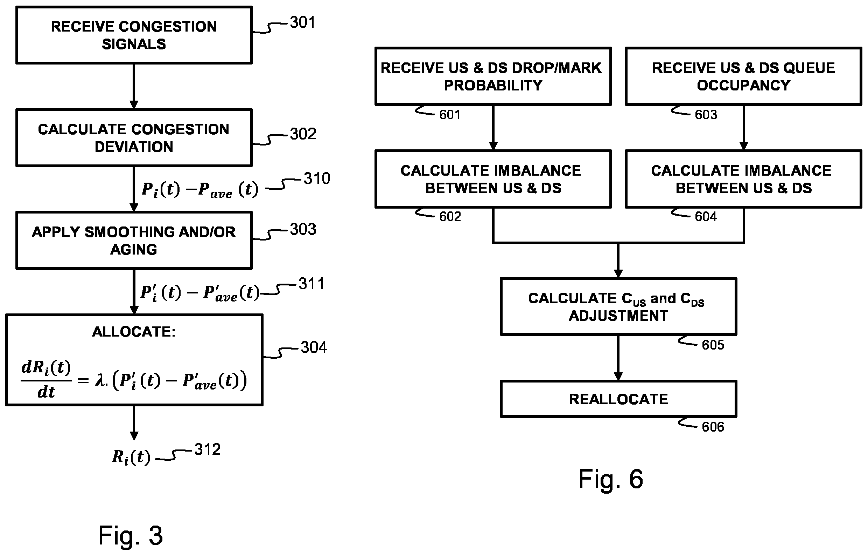

Fig. 3 illustrates steps performed by the computing system 200 according to an embodiment of the invention. In a first step 301, prediction module 201 monitors congestion signals that are introduced on the traffic of each communication channel. A congestion signal may be an indication of some kind derivable from the traffic on the communication channel that congestion starts to occur. Examples of congestion signals are packet losses, packet marks or packet delays. This embodiment will be further illustrated by taking the packet loss as congestion signal represented by the variable $P_i(t)$. This variable may be measured by counting the amount of lost packets over a certain time interval and dividing this by the total amount of packets sent during this time interval.

In the step 302, the prediction module calculates the congestion deviation for each communication channel as

$$P_i(t) - P_{ave}(t)$$

wherein $P_{ave}(t)$ is the average packet loss over all communication channels at a certain time.

The method then proceeds to optional step 303 to apply a smoothing and/or aging operation on the packet loss $P_i(t)$. The aging may be performed because some congestion signals may be missed in step 301. In order to do so the contribution of older congestions signal to the packet loss are decreased, for example by the following equation:

$$P_i(t + \Delta) = P_i(t) . \exp\left(-\Delta/T\right)$$

wherein:

- $\Delta$ is the inter-message time, i.e., the time between two received congestion signals; and
- $T$ is a time constant, chosen much longer than a typical duration of a transfer of bits.

The smoothening may then be performed by decreasing the contribution of sudden increases or decreases of congestion signals to the packet loss, for example by applying a low-pass filter to $P_i(t)$.

Finally, in step 304, the allocation module 202 calculates the resource allocation for each communication channel. In order to do so, the packet loss must be linked to the resource allocation and thus the transport capacity $R_i(t)$ of each channel. This may be done by the estimation that the throughput on a communication channel is inversely proportional to the square-root of the packet loss. The allocation of resources at a certain time t can then be calculated by solving the following differential equation:

$$\frac{dR_i(t)}{dt} = \lambda . \left( P_i(t) - P_{ave}(t) \right)$$

- wherein $\lambda > 0$ is a constant parameter that governs how fast the system converges;
- $R_i(t)$ is the transport capacity in bits per second allocated to the communication channel $i$ at time $t$.

When performing the allocation according to the above equation, the system will converge to a situation where the amount of congestion signals introduced on each communication channel are the same.

The above equation is applicable for scenarios where the total bit rate to be shared of the shared medium is constant, which is typical for wireline media. The same principle can also be applied to wireless media where the amount of physical resources needs to be shared. In such wireless media, the bit rate a channel gets depends on the physical resources the channel gets and on the air interface conditions. These air interface conditions are typically expressed through a constant of proportionality $\omega_i$ (which the air interface can measure and depends on time as air interface conditions change). Concretely, the amount of resources that are needed for the $i^{th}$ channel to send at bit rate $R_i$ is $\omega_i.R_i$. The restriction on the total amount of resources may then be expressed as:

$$\frac{d(\omega_i(t)R_i(t))}{dt} = \lambda . \left( P_i(t) - P_{ave}(t) \right)$$

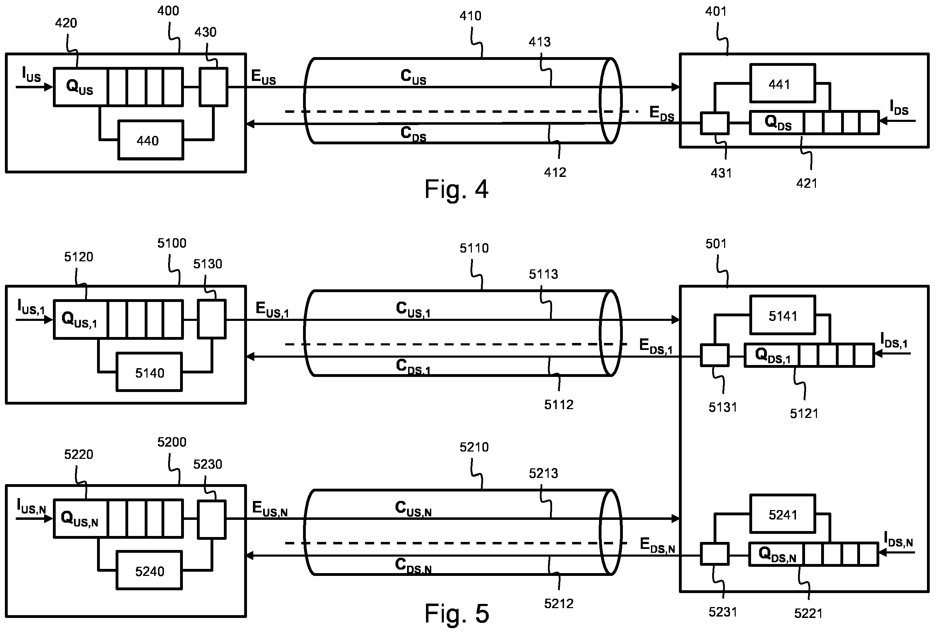

Fig. 4 illustrates a communication system according to an embodiment of the invention. The communication system comprises a wired communication medium 410, a downlink communication device 401 and uplink communication device 400. In this respect, devices 400 and 401 may correspond to devices 100 and 101 and communication medium 410 may correspond to communication medium 110. Device 400 may send packets to device 401 via the uplink communication channel 413 and device 401 may send packets to device 400 via the downlink communication channel 412.

Uplink device 400 further comprises a transmission queue 420 for buffering network packets. Packets that are to be transmitted over the uplink communication channel 413 arrive in the queue 420 at an offered traffic rate or ingress rate lus. The queue 420 may buffer a certain number of packets. The number of packets that reside in the buffer at a certain moment in time is expressed by the queue occupancy Qus which may for example be expressed as a ratio between the number of packets in the queue and the total size of the queue. Packets leave the queue 420 at a serving rate or egress rate Eus and are then transmitted over the communication channel 413 according to the channel's capacity or link rate Cus. The queue is further controlled by packet queue controller 440 according to an AQM algorithm for actively managing congestion on the communication channel 413. The AQM algorithm applies a packet dropping probability or packet marking probability to component 430 which performs the marking or dropping. Summarized, the queue operates as follows:

- If over some time interval the ingress rate lus exceeds the link rate Cus, then the queue occupancy Qus will increase;
- The queue will serve packet from the queue at the allocated link rate Cus as long as there are packets in the queue, i.e., if Qus > 0, then Eus = Cus.
- When the queue gets empty and the ingress rate lus remains below the configured link rate, then the egress rate equals the ingress rate, i.e. if Qus = 0 and lus < Cus then Eus = lus.

Similar to device 400, downlink device 401 comprises a transmission queue 410 for buffering network packets. Packets that are to be transmitted as uplink traffic over the uplink communication channel 412 arrive in the queue 421 at an offered traffic rate or ingress rate $I_{DS}$. The queue 421 may buffer a certain number of packets. The number of packets that reside in the buffer at a certain moment in time is expressed by the queue occupancy $Q_{DS}$ which may for example be expressed as a ratio between the number of packets in the queue and the total size of the queue. Packets leave the queue 421 at a serving rate or egress rate $E_{DS}$ and are then transmitted over the communication channel 412 according to the channel's capacity or link rate $C_{DS}$. The queue is further controlled by packet queue controller 441 according to an AQM algorithm for actively managing congestion on the communication channel 413. The AQM algorithm applies a packet dropping probability or packet marking probability to component 431 which performs the actual marking or dropping. Summarized, the queue operates as follows:

- If over some time interval the ingress rate lus exceeds the link rate $C_{DS}$, then the queue occupancy $Q_{DS}$ will increase;
- The queue will serve packet from the queue at the allocated link rate $C_{DS}$ as long as there are packets in the queue, i.e., if $Q_{DS} > 0$, then $E_{DS} = C_{DS}$.
- When the queue gets empty and the ingress rate lus remains below the configured link rate, then the egress rate equals the ingress rate, i.e. if $Q_{DS} = 0$ and $I_{DS} < C_{DS}$ then $E_{DS} = I_{DS}$.

The link rate Cus and $C_{DS}$ are resources that may be reallocated by a dynamic resource allocation (DRA) algorithm. Fig. 6 illustrates steps performed by a suitable computing device for performing such a dynamic resource allocation according to embodiments of the invention. The algorithm may for example be performed by computing logic available in the downstream device 401, e.g. a DSLAM. In order to perform the steps, the DRA algorithm take as input the packet marking or dropping probabilities Pus and $P_{DS}$ in to account. Optionally, the DRA algorithm may take further local queue information into account such as lus, Qus, Eus, $I_{DS}$, $Q_{DS}$, $E_{DS}$. The packet dropping or marking probabilities Pus and $P_{DS}$ are then numbers indicative for the probability that the AQM will mark or drop a packet in the upstream queue 400, respectively downstream queue 421. The system may receive these values by any kind of control messaging between the DRA algorithm and the respective AQM 440 or 441.

Fig. 6 illustrates steps performed by a DRA algorithm according to an embodiment of the invention. In step 601, the computing system receives the dropping or marking probabilities Pus and $P_{DS}$ applied to both queues 420, 421 by the packet queue controllers 440 and 441. In a next step 602, the system calculates an imbalance $\vartheta_P$ between the probabilities of both queues 420, 421. This imbalance may for example be calculated as follows:

$$\vartheta_P = \frac{P_{US} - P_{DS}}{P_{US} + P_{DS}}$$

Optionally, in steps 603 and 604, the system may also calculate an imbalance between the upstream and downstream queue occupancies Qus and $Q_{DS}$. In order to do so, the system receives in step 603 the respective queue occupancies Qus and $Q_{DS}$. In step 604, an imbalance $\vartheta_Q$ between the queue occupancies is then calculated, e.g. as follows:

$$\vartheta_Q = \frac{Q_{US} - Q_{DS}}{Q_{US} + Q_{DS}}$$

Then, in the next step 605, the system calculates an adjustment of the resource allocation for both the downstream and upstream communication channels 412, 413. The adjustment is calculated such that the imbalance in the mark/drop probabilities is counteracted. Optionally also the imbalance in the queue occupancies is counteracted. This may for example be done by applying the following formula:

$$C_{US} = C_{US}^{old} + \left(\alpha_P \cdot \vartheta_P + \alpha_Q \cdot \vartheta_Q\right) \cdot C_{tot}$$

$$C_{DS} = C_{DS}^{old} - \left(\alpha_P \cdot \vartheta_P + \alpha_Q \cdot \vartheta_Q\right) \cdot C_{tot}$$

and wherein

- $C_{US}^{old}$ is the upstream link rate before the adjustment, i.e. the current uplink link rate; and

- $C_{DS}^{old}$ is the downstream link rate before the adjustment, i.e. the current downlink link rate; and

- $C_{tot}$ is the total link rate that can be allocated to the communication medium 410; and

- $\alpha_P$ is a parameter between 0 and 1 that determines the maximum step for adjustment of the link rate based on the imbalance in drop/mark probability; and

- $\alpha_Q$ is a parameter between 0 and 1 that determines the maximum step for adjustment of the link rate based on the imbalance in queue occupancy;

- $\vartheta_P$ and $\vartheta_Q$ are always in the range of [-1, 1], unless they are undetermined. This may for example occur when both probabilities are zero or when both queues are empty in which case the link rates are set to a predetermined default value.

Advantageously, when one of the updated link rates $C_{US}$ or $C_{DS}$ is too large, it may be limited in order to prevent starvation of the other communication channel. This may be done according to the following conditions:

if $C_{US} > \beta \cdot C_{tot}$, then:

$$\begin{cases} C_{US} = \beta \cdot C_{tot} \\ C_{DS} = (1 - \beta) \cdot C_{tot} \end{cases}$$

and if $C_{US} > \beta \cdot C_{tot}$, then:

$$\begin{cases} C_{US} = (1 - \beta) \cdot C_{tot} \\ C_{DS} = \beta \cdot C_{tot} \end{cases}$$

and wherein $\beta$ is a positive value close to 1

The above resource allocation may for example be used within recent digital subscriber line technologies such as G.fast published under ITU-T G.9700 and G.9701, both providing mechanisms that allow to dynamically control the link rates. One example is by performing the calculated allocation by independent dynamic time assignment (iDTA) allowing to dynamically update the sharing of time division duplex (TDD) frames between upstream and downstream communication channels 412, 413.

Fig. 5 illustrates a communication system according to an embodiment of the invention. The communication system comprises a plurality of N wired communication media 5110-5210 of which only the first and last medium is shown. The system further comprises a single downlink communication device 501 and a plurality of N uplink communication devices 5100, ..., 5200 of which only the first and last medium is shown. In this respect, devices 5100, ..., 5200 may each correspond to an instance of device 400 and each communication medium 5110-5210 may correspond to an instance of communication medium 410. Analogously to Fig. 4, device 5100 comprises a transmission queue 5120 for buffering packets that are to be transmitted on uplink communication channel 5113. The queue is further controlled by packet queue controller 5140 according to an AQM algorithm for actively managing congestion on the communication channel 5113. The AQM algorithm applies a packet dropping probability or packet marking probability $P_{US,1}$ to component 5130 which performs the marking or dropping. Packets are supplied to the queue 5120 at the ingress rate $I_{US,1}$ and leave the queue at the egress rate $E_{US,1}$. The queue occupancy is denoted by $Q_{US,i}$ and the capacity of the uplink channel by $C_{US,1}$. Analogously, device 5200 comprises a transmission queue 5220 for buffering packets that are to be transmitted on uplink communication channel 5213. The queue is further controlled by packet queue controller 5240 according to an AQM algorithm for actively managing congestion on the communication channel 5213. The AQM algorithm applies a packet dropping probability or packet marking probability $P_{US,N}$ to component 5230 which performs the marking or dropping. Packets are supplied to the queue 5220 at the ingress rate $I_{US,N}$ and leave the queue at the egress rate $E_{US,N}$. The queue occupancy is denoted by $Q_{US,N}$ and the capacity of the uplink channel by $C_{US,N}$.

At the downlink side, transmission device 501, e.g. a DSLAM, comprises a plurality of N communication interfaces connected to the respective communication media 5110, ...,5210. Analogously to the uplink side, device 501 comprises N transmission queues 5121, ..., 5221 for buffering packets that are to be transmitted on the respective downlink communication channels 5112, ..., 5212. The queues are further controlled by respective packet queue controllers 5141, ..., 5241 according to an AQM algorithm for actively managing congestion on the respective downlink communication channels 5112, ...,5212. The AQM algorithm applies a respective packet dropping probability or packet marking probability $P_{DS,1}$, ..., $P_{DS,N}$ to components 5131, ..., 5231 which perform the marking or dropping. Packets are supplied to the queues 5121, ..., 5221 at a respective ingress rate $I_{DS,1}$, ..., $I_{DS,N}$ and leave the queue at a respective egress rate $E_{DS,1}$, ..., $E_{DS,N}$. The queue occupancies are denoted by $Q_{DS,1}$, ..., $Q_{DS,1}$ and the capacities of the downstream communication channels by $C_{DS,1}$, ..., $C_{DS,N}$.

The link rate $C_{US,1}$, ..., $C_{US,N}$ and $C_{DS,1}$, ..., $C_{DS,N}$ are resources that may be reallocated by a dynamic resource allocation (DRA) algorithm. The link rates may be allocated by performing the steps of Fig. 6 individually for each link.

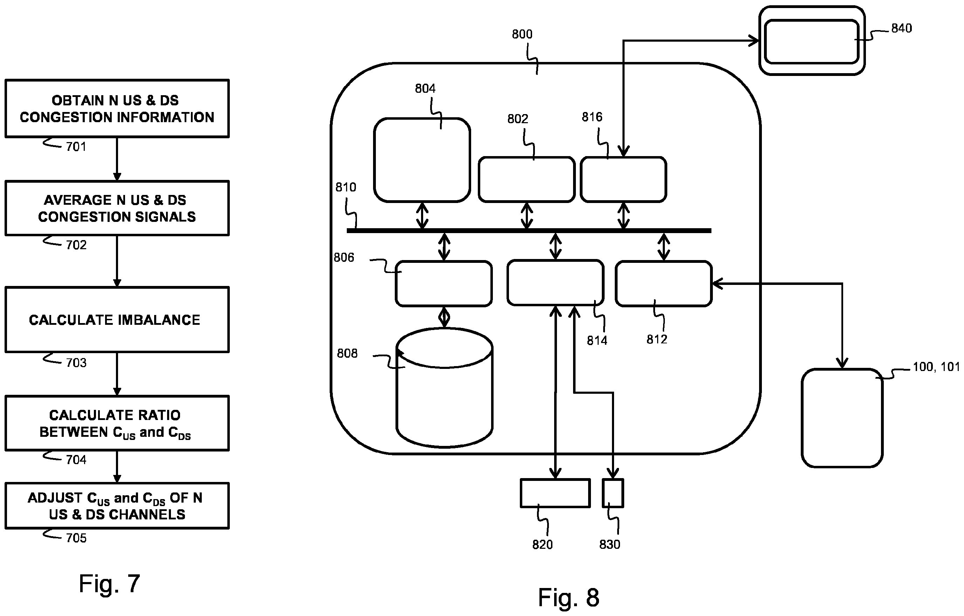

Alternatively, the resource allocation may be performed in a common way, i.e. by determine a common resource allocation between the uplink and downlink communication channels. Fig. 7 illustrates steps for performing such an allocation such that an averaged amount of congestion on the uplink channels 5113, ..., 5213 and on the downlink communication channels 5112, ..., 5212 converges. The algorithm may for example be performed by computing logic available in the downstream device 501, e.g. a DSLAM. In order to perform the steps, the DRA algorithm take as input the packet marking or dropping probabilities $P_{US,1}$, ...,$P_{US,N}$ and $P_{DS,1}$, ...,$P_{DS,N}$ into account. Optionally, the DRA algorithm may take further local queue information into account such as i.e. $I_{US,1}$, ...,$I_{US,1}$, $Q_{US,1}$, ...,$Q_{US,N}$, $E_{US,1}$, ...,$E_{US,N}$, $I_{DS,1}$, ...,$I_{DS,N}$, $Q_{DS,1}$, ...,$Q_{DS,N}$, $E_{DS,1}$, ...,$E_{DS,N}$. The system may receive these values by any kind of control messaging between the DRA algorithm and the respective AQM's 5140, ...,5240 and 5141, ...,5241.

In step 701, the computing system receives the dropping or marking probabilities $P_{DS,1}$,...,$P_{DS,N}$ and $P_{US,1}$, ...,$P_{US,N}$ applied to the queues 5120, ...,5220 and 5121, ...,5221 by the packet queue controllers. In a next step 602, the system calculates average marking probabilities $\tilde{P}_{US}$ and $\tilde{P}_{DS}$ from the respective dropping or marking probabilities $P_{DS,1}$, ...,$P_{DS,N}$ and $P_{US,1}$, ...,$P_{US,N}$. Then, in the next step 703, the upstream and downstream imbalances $\vartheta_{P,US,1}$, ...,$\vartheta_{P,US,N}$ and $\vartheta_{P,DS,1}$, ...,$\vartheta_{P,DS,N}$ are determined. These imbalances may for example be calculated as follows:

$$\vartheta_{P,US,1} = \frac{P_{US,1} - \tilde{P}_{DS}}{\tilde{P}_{US} + \tilde{P}_{DS}}$$

$$\vartheta_{P,US,N} = \frac{P_{US,N} - \tilde{P}_{DS}}{\tilde{P}_{US} + \tilde{P}_{DS}}$$

$$\vartheta_{P,DS,1} = \frac{P_{DS,1} - \tilde{P}_{US}}{\tilde{P}_{US} + \tilde{P}_{DS}}$$

$$\vartheta_{P,DS,N} = \frac{P_{DS,N} - \tilde{P}_{US}}{\tilde{P}_{US} + \tilde{P}_{DS}}$$

Then, in the next step 704, the system calculates an adjustment of the common resource allocation between the downstream and upstream communication channels. The adjustment is calculated such that the imbalance in the mark/drop probabilities is counteracted. Optionally also the imbalance in the queue occupancies is counteracted. This may for example be done by applying the following formula:

$$\frac{C_{US,1}}{C_{tot}} = \frac{C_{US,1}^{old}}{C_{tot}} + \alpha_P \cdot \tilde{\vartheta}_{P,US,1}$$

$$\frac{C_{US,N}}{C_{tot}} = \frac{C_{US,N}^{old}}{C_{tot}} + \alpha_P \cdot \tilde{\vartheta}_{P,US,N}$$

$$\frac{C_{DS,1}}{C_{tot}} = \frac{C_{DS,1}^{old}}{C_{tot}} + \alpha_P \cdot \tilde{\vartheta}_{P,DS,1}$$

$$\frac{C_{DS,N}}{C_{tot}} = \frac{C_{DS,N}^{old}}{C_{tot}} + \alpha_P \cdot \tilde{\vartheta}_{P,DS,N}$$

and wherein

- $\frac{C_{US,1}^{old}}{C_{tot}}$, ..., $\frac{C_{US,N}^{old}}{C_{tot}}$ are the shares of the link rate for the upstream channels before the adjustment; and

- $\frac{C_{DS,1}^{old}}{C_{tot}}$, ..., $\frac{C_{DS,N}^{old}}{C_{tot}}$ are the shares of the link rate for the downstream channels before the adjustment; and

- $\frac{C_{US,1}}{C_{tot}}$, ..., $\frac{C_{US,N}}{C_{tot}}$ are the updated shares of the link rate for the upstream channels; and

- $\frac{C_{DS,1}}{C_{tot}}$, ..., $\frac{C_{DS,N}}{C_{tot}}$ are the updated shares of the link rate for the downstream channels; and

- $C_{tot}$ is the average link rate that can be allocated to the communication media; and

- $\alpha_P$ is a parameter between 0 and 1 that determines the maximum step for adjustment of the link rate based on the imbalance in drop/mark probability; and

- The imbalances $\vartheta_{P,US,1}$, ,,,. $\vartheta_{P,US,1}$, $\vartheta_{P,US,1}$, ..., $\vartheta_{P,US,1}$, sum to 0 and individually are always in the range of [-1, 1], unless they are undetermined. This may for example occur when both average probabilities $\tilde{P}_{US}$ and $\tilde{P}_{DS}$ are zero or when both queues are empty in which case the link rates are set to a predetermined default value.

In the last step 705, the link rates of all communication channels is then adapted according to the calculated uplink share $\frac{C_{US,1}}{C_{tot}}$, ..., $\frac{C_{US,N}}{C_{tot}}$ and downlink share $\frac{C_{DS,1}}{C_{tot}}$, ..., $\frac{C_{DS,N}}{C_{tot}}$.

The above common resource allocation may for example be used within recent digital subscriber line technologies such as G.fast published under ITU-T G.9700 and G.9701, both providing mechanisms that allow to dynamically control the link rates. One example is by performing the calculated allocation by common dynamic time assignment (cDTA) allowing to dynamically update the sharing of time division duplex (TDD) frames between all upstream and all downstream communication channels.

Fig. 8 shows computing system 800 according to an embodiment of the invention. Computing system 800 is suitable for performing the steps according to the above embodiments. Computing system 800 may also be incorporated in or used as communication devices 100, 101, 400, 401, 5100, 5200, 501. Computing system 800 may also be a separate system that can communicate with devices 100, 101, 400, 401, 5100, 5200, 501 in order to perform the operations 301, 401, 601, 603, 701. Computing system 800 may in general be formed as a suitable general purpose computer and comprise a bus 810, a processor 802, a local memory 804, one or more optional input interfaces 814, one or more optional output interfaces 816, a communication interface 812, a storage element interface 806 and one or more storage elements 808. Bus 810 may comprise one or more conductors that permit communication among the components of the computing system 800. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator to input information to the computing device 800, such as a keyboard 820, a mouse 830, a pen, voice recognition and/or biometric mechanisms, etc. Output interface 816 may comprise one or more conventional mechanisms that output information to the operator, such as a display 840, etc. Communication interface 812 may comprise any transceiver-like mechanism such as for example one or more Ethernet interfaces that enables computing system 800 to communicate with other devices and/or systems, for example with networking devices 100, 101. The communication interface 812 of computing system 800 may be connected to such another computing system by means of a local area network (LAN) or a wide area network (WAN) such as for example the internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage elements 808 above is described as a local disk, in general any other suitable computer-readable media such as a removable magnetic disk, optical storage media such as a CD or DVD, -ROM disk, solid state drives, flash memory cards, ... could be used. The system 800 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A communication controller (200, 401, 501, 800) for allocating resources to communication channels (112, 113, 412, 413, 5112, 5113, 5212, 5213) used by networking devices (100, 101, 400, 401, 501) sharing a communication medium (110, 410, 5110, 5210); and wherein the system is configured to:

   - obtain (301, 601, 603, 701-702) congestion information indicative of amounts of congestion on the respective communication channels;
   - allocate (304, 606, 705) the resources such that the amounts of congestion converge.

2. The communication controller according to claim 1 wherein the congestion information comprises packet losses or packets marked for congestion as monitored on the respective communication channels.

**3.** The communication controller (200) according to claim 2 wherein the congestion information comprises a deviation (302) from an average amount of congestion signals detected on the respective communication channels; and wherein the allocating is performed (304) such that, for a respective communication channel, a change of the allocated transport capacity in time is proportional to the calculated deviation.

**4.** The communication controller (200) according to claim 3 further configured to smoothen (303) a contribution of sudden increases or decreases in the congestion information.

**5.** The communication controller (200, 401, 501, 800) according to claim 1 wherein the congestion information comprises dropping or marking probabilities (601) used by respective packet queue controllers for controlling network congestion on the respective communication channels.

**6.** The communication controller according to claim 5 wherein the allocating (606) is performed by counteracting (602-605) a first imbalance between the dropping or marking probabilities.

**7.** The communication controller (200, 401, 501, 800) according to claim 6 further configured to obtain at least one of:

- queue occupancies (603) of transmit packet queues (420, 421, 5120, 5121, 5220, 5221) of the respective communication channels; and
- ingress rate of the transmit packet queues; and
- egress rate of the transmit packet queues;

or a time derivative thereof.

**8.** The communication controller according to claim 7 wherein the allocating is further performed by further counteracting (604, 605) a second imbalance between the queue occupancies or a derivative thereof.

**9.** The communication controller (200, 401, 501, 800) according to any one of the preceding claims wherein communication medium (110, 410, 5110, 5210) comprises an uplink (113, 413, 5113, 5213) and a downlink (112, 412, 5112, 5212) communication channel; and wherein the communication controller is configured to perform the resource allocation between the uplink and downlink communication channels.

**10.** A communication controller (501, 800) for allocating resources to a plurality of uplink (5113, 5213) and downlink (5112, 5212) communication channels on a respective plurality of communication media (5110, 5210); and wherein the communication controller is configured to:

- obtain (701) congestion information indicative of amounts of congestion on the respective communication channels; and
- determine a common resource allocation (704) between the uplink and downlink communication channels such that amounts (702) of congestion on the respective uplink and downlink communication channels converge (703-704) to a common average.

**11.** A computer-implemented method for allocating resources to communication channels (112, 113, 412, 413, 5112, 5113, 5212, 5213) used by networking devices (100, 101, 400, 401, 501) sharing a communication medium (110, 410, 5110, 5210); the method comprising the following steps:

- obtaining (301, 601, 603, 701-702) congestion information indicative of amounts of congestion on the respective communication channels;
- allocating (304, 606, 705) the resources such that the amounts of congestion converge.

**12.** A computer-implemented method for allocating resources to a plurality of uplink (5113, 5213) and downlink (5112, 5212) communication channels on a respective plurality of communication media (5110, 5210); the method comprising the following steps:

- obtaining (701) congestion information indicative of amounts of congestion on the respective communication channels; and
- determining a common resource allocation (704) between the uplink and downlink communication channels such that amounts (702) of congestion on the respective uplink and downlink communication channels converge (703-704) to a common average.

**Patentansprüche**

**1.** Kommunikationssteuervorrichtung (200, 401, 501, 800) zum Zuteilen von Ressourcen an Kommunikationskanäle (112, 113, 412, 413, 5112, 5113, 5212, 5213), die durch Netzwerkvorrichtungen (100, 101, 400, 401, 501) verwendet werden, die ein Kommunikationsmedium (110, 410, 5110, 5210) gemeinsam nutzen; und wobei das System dazu ausgelegt ist:

- Überlastungsinformationen zu erhalten (301, 601, 603, 701-702), die die Überlastungsmengen auf den jeweiligen Kommunikationskanälen angeben;

- die Ressourcen so zuzuteilen (304, 606, 705), dass die Überlastungsmengen zusammenlaufen.

2. Kommunikationssteuervorrichtung nach Anspruch 1, wobei die Überlastungsinformationen Paketverluste oder für Überlastung markierte Pakete umfassen, die auf den jeweiligen Kommunikationskanälen überwacht werden.

3. Kommunikationssteuervorrichtung (200) nach Anspruch 2, wobei die Überlastungsinformationen eine Abweichung (302) von einer durchschnittlichen Menge von Überlastungssignalen umfasst, die auf den jeweiligen Kommunikationskanälen erfasst werden; und
wobei das Zuteilen so durchgeführt wird (304), dass für einen jeweiligen Kommunikationskanal eine zeitliche Änderung der zugeteilten Transportkapazität proportional zu der berechneten Abweichung ist.

4. Kommunikationssteuervorrichtung (200) nach Anspruch 3, die ferner dazu ausgelegt ist, einen Beitrag von plötzlichen Zunahmen oder Abnahmen der Überlastungsinformationen zu glätten (303).

5. Kommunikationssteuervorrichtung (200, 401, 501, 800) nach Anspruch 1, wobei die Überlastungsinformationen Auslassungs- oder Markierungswahrscheinlichkeiten (601) umfassen, die durch jeweilige Paketwarteschlangen-Steuervorrichtungen zum Steuern der Netzwerküberlastung auf den jeweiligen Kommunikationskanälen verwendet werden.

6. Kommunikationssteuervorrichtung nach Anspruch 5, wobei das Zuteilen (606) durch Entgegenwirken (602-605) eines ersten Ungleichgewichts zwischen den Auslassungs- oder Markierungswahrscheinlichkeiten durchgeführt wird.

7. Kommunikationssteuervorrichtung (200, 401, 501, 800) nach Anspruch 6, ferner dazu ausgelegt, mindestens eines von Folgendem zu erhalten:

    - Warteschlangenbelegungen (603) der Sendepaketwarteschlangen (420, 421, 5120, 5121, 5220, 5221) der jeweiligen Kommunikationskanäle; und
    - Eindringrate der Sendepaketwarteschlangen; und
    - Austrittsrate der Sendepaketwarteschlangen;

    oder eine Zeitableitung davon.

8. Kommunikationssteuervorrichtung nach Anspruch 7, wobei das Zuteilen ferner durch weiteres Entgegenwirken (604, 605) eines zweiten Ungleichgewichts zwischen den Warteschlangenbelegungen oder einer Ableitung davon durchgeführt wird.

9. Kommunikationssteuervorrichtung (200, 401, 501, 800) nach einem der vorhergehenden Ansprüche, wobei das Kommunikationsmedium (110, 410, 5110, 5210) einen Aufwärtsstrecken- (113, 413, 5113, 5213) und einen Abwärtsstrecken-Kommunikationskanal (112, 412, 5112, 5212) umfasst; und wobei die Kommunikationssteuervorrichtung dazu ausgelegt ist, die Ressourcenzuteilung zwischen den Aufwärtsstrecken- und Abwärtsstrecken-Kommunikationskanälen durchzuführen.

10. Kommunikationssteuervorrichtung (501, 800) zum Zuteilen von Ressourcen zu einer Vielzahl von Aufwärtsstrecken- (5113, 5213) und Abwärtsstrecken-Kommunikationskanälen (5112, 5212) auf einer jeweiligen Vielzahl von Kommunikationsmedien (5110, 5210); und wobei die Kommunikationssteuervorrichtung dazu ausgelegt ist:

    - Überlastungsinformationen zu erhalten (701), die die Überlastungsmengen auf den jeweiligen Kommunikationskanälen angeben; und
    - eine gemeinsame Ressourcenzuteilung (704) zwischen den Aufwärtsstrecken- und Abwärtsstrecken-Kommunikationskanälen zu bestimmen, sodass die Überlastungsmengen (702) auf den jeweiligen Aufwärtsstrecken- und Abwärtsstrecken-Kommunikationskanälen zu einem gemeinsamen Durchschnitt (703-704) zusammenlaufen.

11. Computerimplementiertes Verfahren zum Zuteilen von Ressourcen an Kommunikationskanäle (112, 113, 412, 413, 5112, 5113, 5212, 5213), die durch Netzwerkvorrichtungen (100, 101, 400, 401, 501) verwendet werden, die ein Kommunikationsmedium (110, 410, 5110, 5210) gemeinsam nutzen; wobei das Verfahren die folgenden Schritte umfasst:

    - Erhalten (301, 601, 603, 701-702) von Überlastungsinformationen, die die Überlastungsmengen auf den jeweiligen Kommunikationskanälen angeben;
    - Zuteilen (304, 606, 705) der Ressourcen, sodass die Überlastungsmengen zusammenlaufen.

12. Computerimplementiertes Verfahren zum Zuteilen von Ressourcen an eine Vielzahl von Aufwärtsstrecken- (5113, 5213) und Abwärtsstrecken-Kommunikationskanälen (5112, 5212) auf einer jeweiligen Vielzahl von Kommunikationsmedien (5110, 5210); wobei das Verfahren die folgenden Schritte umfasst:

    - Erhalten (701) von Überlastungsinformationen, die die Überlastungsmengen auf den jeweiligen Kommunikationskanälen angeben; und

- Bestimmen einer gemeinsamen Ressourcenzuteilung (704) zwischen den Aufwärtsstrecken- und Abwärtsstrecken-Kommunikationskanälen, sodass die Überlastungsmengen (702) auf den jeweiligen Aufwärtsstrecken- und Abwärtsstrecken-Kommunikationskanälen zu einem gemeinsamen Durchschnitt zusammenlaufen (703-704).

## Revendications

1. Dispositif de commande de communication (200, 401, 501, 800) destiné à attribuer des ressources à des canaux de communication (112, 113, 412, 413, 5112, 5113, 5212, 5213) utilisés par des dispositifs de réseau (100, 101, 400, 401, 501) partageant un support de communication (110, 410, 5110, 5210) ; et dans lequel le système est configuré pour :

   obtenir (301, 601, 603, 701-702) des informations de congestion indiquant des quantités de congestion sur les canaux de communication respectifs ;
   attribuer (304, 606, 705) les ressources de sorte que les quantités de congestion convergent.

2. Dispositif de commande de communication selon la revendication 1, dans lequel les informations de congestion comprennent des pertes de paquets ou des paquets marqués en congestion comme surveillés sur les canaux de communication respectifs.

3. Dispositif de commande de communication (200) selon la revendication 2, dans lequel les informations de congestion comprennent un écart (302) par rapport à une quantité moyenne de signaux de congestion détectés sur les canaux de communication respectifs ; et dans lequel l'attribution est exécutée (304) de sorte que, pour un canal de communication respectif, un changement de la capacité de transport attribuée dans le temps soit proportionnel à l'écart calculé.

4. Dispositif de commande de communication (200) selon la revendication 3, configuré en outre pour lisser (303) une contribution d'augmentations ou de diminutions soudaines dans les informations de congestion.

5. Dispositif de commande de communication (200, 401, 501, 800) selon la revendication 1, dans lequel les informations de congestion comprennent des probabilités d'abandon ou de marquage (601) utilisées par des dispositifs de commande de file d'attente de paquets respectifs afin de contrôler la congestion du réseau sur les canaux de communication respectifs.

6. Dispositif de commande de communication selon la revendication 5, dans lequel l'attribution (606) est exécutée par une action à l'encontre (602-605) d'un premier déséquilibre entre les probabilités d'abandon ou de marquage.

7. Dispositif de commande de communication (200, 401, 501, 800) selon la revendication 6, configuré en outre pour obtenir au moins un élément parmi les suivants :

   des taux d'occupation de file d'attente (603) de files d'attente de paquets de transmission (420, 421, 5120, 5121, 5220, 5221) des canaux de communication respectifs ; et
   un taux d'entrée des files d'attente de paquets de transmission ; et
   un taux de sortie des files d'attente de paquets de transmission ;
   ou un dérivé temporel de ceux-ci.

8. Dispositif de commande de communication selon la revendication 7, dans lequel l'attribution est en outre exécutée en outre par une action à l'encontre (604, 605) d'un second déséquilibre entre les taux d'occupation de file d'attente ou un dérivé de ceux-ci.

9. Dispositif de commande de communication (200, 401, 501, 800) selon l'une quelconque des revendications précédentes, dans lequel le support de communication (110, 410, 5110, 5210) comprend un canal de communication en liaison montante (113, 413, 5113, 5213) et un canal de communication en liaison descendante (112, 412, 5112, 5212) ; et dans lequel le dispositif de commande de communication est configuré pour exécuter l'attribution de ressources entre les canaux de communication en liaison montante et en liaison descendante.

10. Dispositif de commande de communication (501, 800) destiné à attribuer des ressources à une pluralité de canaux de communication en liaison montante (5113, 5213) et en liaison descendante (5112, 5212) sur une pluralité respective de supports de communication (5110, 5210) ; et dans lequel le dispositif de commande de communication est configuré pour :

   obtenir (701) des informations de congestion indiquant des quantités de congestion sur les canaux de communication respectifs ; et
   déterminer une attribution de ressources communes (704) entre les canaux de communication en liaison montante et en liaison descendante de sorte que les quantités (702) de congestion sur les canaux de communication en liaison descendante et en liaison montante respectifs convergent (703-704) vers une moyenne commune.

11. Procédé mis en œuvre par ordinateur destiné à attribuer des ressources à des canaux de communication (112, 113, 412, 413, 5112, 5113, 5212, 5213) utilisés par des dispositifs de réseau (100, 101, 400, 401, 501) partageant un support de communication (110, 410, 5110, 5210) ; le procédé comprenant les étapes suivantes :

l'obtention (301, 601, 603, 701-702) d'informations de congestion indiquant des quantités de congestion sur les canaux de communication respectifs ;
l'attribution (304, 606, 705) des ressources de sorte que les quantités de congestion convergent.

12. Procédé mis en œuvre par ordinateur destiné à attribuer des ressources à une pluralité de canaux de communication en liaison montante (5113, 5213) et en liaison descendante (5112, 5212) sur une pluralité respective de supports de communication (5110, 5210) ; le procédé comprenant les étapes suivantes :

l'obtention (701) d'informations de congestion indiquant des quantités de congestion sur les canaux de communication respectifs ; et
la détermination d'une attribution de ressources communes (704) entre les canaux de communication en liaison montante et en liaison descendante de sorte que les quantités (702) de congestion sur les canaux de communication en liaison montante et en liaison descendante respectifs convergent (703-704) vers une moyenne commune.

Fig. 1

Fig. 2

EP 3 516 858 B1

## Fig. 3

RECEIVE CONGESTION SIGNALS ⟋—301

↓

CALCULATE CONGESTION DEVIATION ⟋—302

↓ $P_i(t) - P_{ave}(t)$ ⟋—310

APPLY SMOOTHING AND/OR AGING ⟋—303

↓ $P_i'(t) - P_{ave}'(t)$ ⟋—311

ALLOCATE:

$$\frac{dR_i(t)}{dt} = \lambda. \left( P_i'(t) - P_{ave}'(t) \right)$$

⟋—304

↓

$R_i(t)$ ⟋—312

Fig. 3

## Fig. 6

RECEIVE US & DS DROP/MARK PROBABILITY ⟍ 601

↓

CALCULATE IMBALANCE BETWEEN US & DS ⟍ 602

RECEIVE US & DS QUEUE OCCUPANCY ⟍ 603

↓

CALCULATE IMBALANCE BETWEEN US & DS ⟍ 604

↓

CALCULATE $C_{US}$ and $C_{DS}$ ADJUSTMENT ⟍ 605

↓

REALLOCATE ⟍ 606

Fig. 6

Fig. 4

Fig. 5

EP 3 516 858 B1

Fig. 8

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130091248 A1
- US 7440760 B2
- WO 2014209493 A1
- WO 2013132213 A1